# EUROPÄISCHE PATENTSCHRIFT

(11) **EP 3 258 218 B1**
(45) Veröffentlichungstag und Bekanntmachung des Hinweises auf die Patenterteilung: **09.01.2019**
(21) Anmeldenummer: 16174885.0
(22) Anmeldetag: 17.06.2016
(51) Int. Cl.: G01D 5/26, B66B 1/34

(54) **PERSONEN- UND/ODER GÜTERTRANSPORTSYSTEM**
PASSENGER AND/OR GOODS TRANSPORT SYSTEM
SYSTEME DE TRANSPORT DE MARCHANDISES ET/OU DE PERSONNES

(43) Veröffentlichungstag der Anmeldung: 20.12.2017
(73) Patentinhaber: SICK STEGMANN GmbH, 78166 Donaueschingen (DE)
(72) Erfinder: Basler, Stefan, 78086 Brigachtal (DE); Mezger, Matthias, 77704 Oberkirch (DE); Schneider, Stefan, 78087 Mönchweiler (DE)
(74) Vertreter: Hehl, Ulrich

(56) Entgegenhaltungen:
- EP-A1- 2 179 957
- EP-A2- 2 108 962
- FR-A1- 3 008 180
- US-A1- 2007 000 736
- US-A1- 2010 309 452

## Beschreibung

Die vorliegende Erfindung betrifft ein Personen- und/oder Gütertransportsystem, vorzugsweise einen Aufzug oder ein automatisiertes Logistiklager gemäß dem Oberbegriff des Anspruchs 1.

In einem Personen-/Gütertransportsystem, wie beispielsweise einem Aufzug oder einem automatisierten Logistiklager, können Personen oder Güter in einem beweglichen Förderkorb, beispielsweise einer Kabine oder einem Förderschlitten, in vertikaler, horizontaler oder schräger Richtung zwischen zwei oder mehreren Ebenen bzw. Zielen transportiert werden. Der Förderkorb wird entlang von mindestens zwei Führungsschienen verfahren. Ein solches Personen-/Gütertransportsystem zählt in der Fördertechnik zu den unstetigen Förderanlagen. Zur korrekten Steuerung dieser Anlagen wird eine Information über eine Position und/oder eine Geschwindigkeit des Förderkorbes benötigt. Insbesondere bei einem Aufzug wird dies über eine sogenannte Schachtkopierung bzw. Aufzugsschachtinformation erreicht.

Bei der Erfassung der Position und/oder der Geschwindigkeit des Förderkorbes werden herkömmlich hauptsächlich riemenbasierte digitale Schachtkopiersysteme eingesetzt. Bei diesen Systemen werden im Aufzugsschacht Riemen gespannt. Am Förderkorb bzw. an der Kabine wird eine mechanische Messeinheit vorgesehen, die aus Umlenkrädern und einem Encoder besteht. Mit dem durch den Riemen angetriebenen Encoder können je nach Art Geschwindigkeit oder Position des Förderkorbes im Aufzugsschacht ermittelt werden.

Hierbei ergibt sich der Nachteil, dass, während die Information über die Geschwindigkeit noch ausreichend genau ist, die Positionsinformation durch Streckung des Seils verfälscht ist.

Um eine bessere Erfassung der Position und/oder der Geschwindigkeit des Förderkorbes zu erzielen, werden zunehmend magnetbasierte oder optische Systeme eingesetzt.

Bei dem magnetbasierten System wird ein Magnetband als Maßverkörperung in dem Aufzugsschacht angeordnet, so dass ein am Förderkorb vorgesehener Sensor das Magnetband erfasst. Aus der erfassten Position des Magnetbandes werden die Position und/oder die Geschwindigkeit des Förderkorbes hergeleitet.

Bei dem optischen System wird ein Codeband in dem Aufzugsschacht angeordnet, so dass mittels einer am Förderkorb vorgesehenen Kamera das Codeband erfasst wird. Das berührungslos funktionierende Kamerasystem auf dem Förderkorb erfasst das Codeband und leitet die Messsignale an eine Aufzugssteuerung weiter, so dass aus den Messsignalen die Position und/oder die Geschwindigkeit des Förderkorbes bestimmt werden können.

Die erwähnten magnetischen und optischen Systeme weisen den Nachteil auf, dass eine zusätzliche Maßverkörperung in Form des Magnetbandes bzw. des Codebandes in den Aufzugsschacht eingesetzt werden muss. Ferner, je höher der Aufzugsschacht ist, desto größer wird ein Montageaufwand für die Maßverkörperung und desto größer werden die Kosten für die Maßverkörperung.

EP 2 108 962 A2 beschreibt eine Vorrichtung zum Erfassen einer Geschwindigkeit eines Sportlers, wobei die Vorrichtung einen Sensor umfasst, der an einem Hüftgürtel am Sportler vorgesehen werden kann. Der Sensor strahlt eine Ultraschall- oder Mikrowelle auf eine Laufoberfläche, so dass aus einem reflektierten Signal mittels einer Doppler-Verschiebung auf die Geschwindigkeit des Sportlers geschlossen werden kann.

US 2010/0309452 A2 beschreibt eine Vermessungsvorrichtung zum Vermessen von Aufzugsschächten.

FR 3 008 180 A1 beschreibt eine optoelektronische Messvorrichtung, bei der eine Verschiebung eines Ziels der Messvorrichtung mittels einer selbstmischenden Interferenz der Signale der Messvorrichtung bestimmbar ist.

EP 2 179 957 A1 offenbart einen Schrägaufzug mit einem laserbasierten Distanzsensor gemäß dem Oberbegriff des Anspruchs 1, wobei eine Position eines Transportschlittens auf dem Prinzip einer Distanzmessung zwischen dem Distanzsensor und dem Transportschlitten ermittelt wird. Hierdurch ist die Positionsbestimmung in ihrer Genauigkeit eingeschränkt.

US 2007/000736 A1 offenbart einen Fahrstuhl gemäß dem Oberbegriff des Anspruchs 1.

Es ist eine Aufgabe der vorliegenden Erfindung, ein Personen- und/oder Gütertransportsystem zur Verfügung zu stellen, das eine genaue, optische Positionsbestimmung des Systems ohne eine Einschränkung durch den Aufbau des Personen- und/oder Gütertransportsystems ermöglicht.

Die Aufgabe wird erfindungsgemäß durch ein Personen- und/oder Gütertransportsystem mit den Merkmalen des Anspruchs 1 gelöst.

Gemäß einem weiteren bevorzugten Ausführungsbeispiel ist das Messsignal als eine Amplitudenänderung des kohärenten Lichts durch die Interferenz herleitbar.

Gemäß einem weiteren bevorzugten Ausführungsbeispiel ist die Oberfläche eine Bezugsfläche eines Schachtes oder ein im Schacht montiertes Teil des Personen/Gütertransportsystems. Hierbei kann vorteilhafterweise auf eine Maßverkörperung verzichtet werden, da jede Oberfläche innerhalb des Schachtes des Personen-/Gütertransportsystems als Reflexionsfläche dienen kann, wodurch die Kosten für das Personen-/Gütertransportsystem deutlich reduziert werden können.

Vorteilhafterweise ist das Teil des Personen-/Gütertransportsystems eine Führungsschiene des Förderkorbes oder ein Führungsseil des Förderkorbes. Hierdurch ist eine Unabhängigkeit eines Aufbaus des erfindungsgemäßen Personen-/Gütertransportsystems von einer Schachthöhe bzw. Förderhöhe erzielbar, da der Aufbau nicht durch eine zusätzliche Maßverkörperung begrenzt ist.

Gemäß einem weiteren bevorzugten Ausführungsbeispiel umfasst das Personen/Gütertransportsystem einen Aufzug und der Förderkorb ist eine Kabine des Aufzugs.

Ferner umfasst gemäß einem bevorzugten Ausführungsbeispiel das Gütertransportsystem ein automatisiertes Logistiklager und der Förderkorb ist ein Förderschlitten.

Gemäß einem weiteren bevorzugten Ausführungsbeispiel ist an der Oberfläche zumindest eine Codierungsmarke vorgesehen, die durch die Messeinheit abtastbar ist und eine Referenzposition wiedergibt. Vorteilhafterweise umfasst die Referenzposition eine absolute Position des Förderkorbes in Bezug zu einem Ausgang des Personen-/Gütertransportsystems. Hierdurch ergibt sich der Vorteil, dass der Förderkorb auf einfachster Weise exakt an dem Ausgang des Personen/Gütertransportsystems, wie beispielsweise einer Aufzugstür bzw. einem Stockwerk oder einer Be-/Entladungsöffnung im Regal des Logistiklagers, angehalten werden kann.

Vorzugsweise ist die Messeinheit als extern angebauter Sensor oder als einen Teil des Förderkorbes vorgesehen. Hierdurch eignet sich die erfindungsgemäße Steuerungsvorrichtung hervorragend zum Nachrüsten von bestehenden Personen-/Gütertransportsysteme.

Gemäß einem weiteren bevorzugten Ausführungsbeispiel sind zumindest zwei Messeinheiten vorgesehen, und wobei die eine Messeinheit eine senkrechte Bewegung des Förderkorbes und die andere Messeinheit eine horizontale Bewegung des Förderkorbes erfasst. Vorteilhafterweise ermittelt die Steuereinheit aus den Messsignalen der beiden Messeinheiten einen Bewegungsvektor des Förderkorbes, wodurch die Bestimmung der Position und der Geschwindigkeit des Förderkorbes nicht fest an eine Bewegungsrichtung gebunden ist, so dass die Bestimmung einer vertikalen, horizontalen und diagonalen Bewegung des Förderkorbes sowie ein Übergang von Bewegungsrichtungen des Förderkorbes ermöglicht ist.

Weiterhin ist gemäß einem weiteren bevorzugten Ausführungsbeispiel die Messeinheit derart vorgesehen, dass ein Schaltsignal an die Steuereinheit sendbar ist, wenn das Messsignal einen vorgegebenen Schwellenwert überschreitet. Insbesondere gibt vorzugsweise der Schwellenwert eine definierte maximale Geschwindigkeit, eine definierte maximale Beschleunigung und/oder einen definierten Fahrweg des Förderkorbes wieder.

Bevorzugte Ausgestaltungen und Weiterbildungen sowie weitere Vorteile der Erfindung sind den Unteransprüchen, der nachfolgenden Beschreibung und den Zeichnungen zu entnehmen.

Im Folgenden wird die Erfindung anhand von Ausführungsbeispielen unter Bezugnahme auf die Zeichnung im Einzelnen erläutert. Hierbei sind gleiche Teile in den Zeichnungen mit den gleichen Bezugszeichen gekennzeichnet. In den Zeichnungen zeigen:
- Fig. 1: eine schematische Darstellung eines bevorzugten Ausführungsbeispiels eines erfindungsgemäßen Personen-/Gütertransportsystems;
- Fig. 2: eine schematische Darstellung des Ausführungsbeispiels der Figur 1 entlang der Schnittlinie A - A mit einer schematischen Vergrößerungsansicht der Darstellung der Messeinheit; und
- Fig. 3: eine schematische Darstellung eines weiteren bevorzugten Ausführungsbeispiels des erfindungsgemäßen Personen-/Gütertransportsystems.

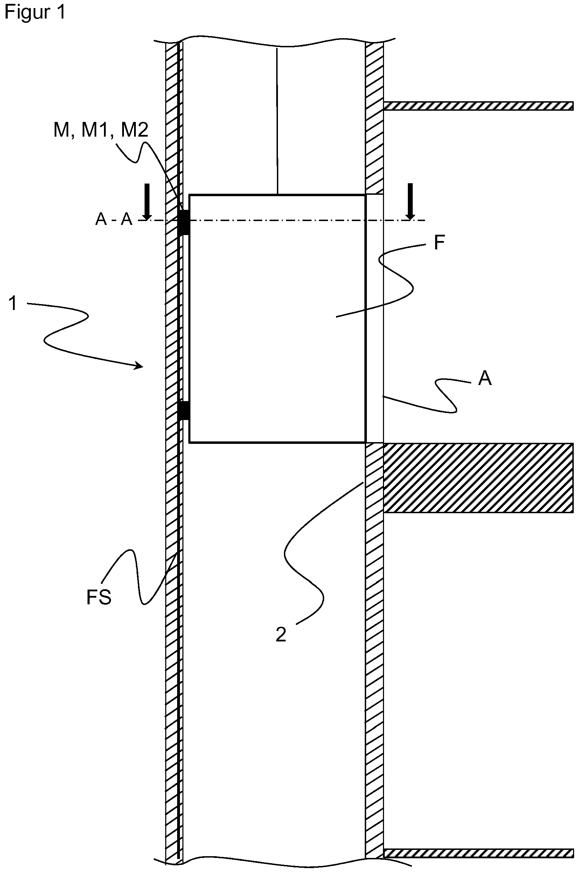

In Figur 1 ist ein erstes Ausführungsbeispiel eines erfindungsgemäßen Personen- und/oder Gütertransportsystems 1, insbesondere in Form eines Aufzuges, gezeigt. Der Aufzug weist einen Förderkorb F auf, der in einem Führungsschacht bzw. Schacht 2 angeordnet ist und insbesondere eine Kabine des Aufzuges ist. In einem nicht dargestellten Ausführungsbeispiel des erfindungsgemäßen Personen- und/oder Gütertransportsystems 1 umfasst das Gütertransportsystem 1 ein automatisiertes Logistiklager, so dass der Förderkorb F ein Förderschlitten innerhalb des automatisierten Logistiklagers ist. Hierbei dient der Förderkorb F zum Befördern von Personen und/oder Güter in einem Gebäude oder zum Befördern von Güter innerhalb des automatisierten Logistiklagers und wird entlang einer Führungsschiene FS geführt.

Das Personen- und/oder Gütertransportsystem 1 bzw. das dargestellte bevorzugte Ausführungsbeispiel des Aufzuges wird durch eine nicht dargestellte Steuereinheit in seinem Betrieb gesteuert, so dass der Förderkorb F an einem jeweiligen Ausgang A eines Stockwerkes exakt zum Halten gebracht werden kann.

Hierzu benötigt die Steuereinheit Informationen in Verbindung mit dem Förderkorb F, um eine Position und/oder eine Geschwindigkeit des Förderkorbes F bestimmen zu können.

Die Informationen werden der Steuereinheit erfindungsgemäß mittels zumindest einer laserbasierten, berührungslosen Messeinheit M, M1 und M2 in Form von zumindest einem Messsignal geliefert. Die Steuereinheit empfängt von der Messeinheit M, M1 das Messsignal und bestimmt aus dem Messsignal die Geschwindigkeit und/oder die Position des Förderkorbes F und kann zumindest einen Antriebsmotor des Aufzuges ansteuern.

Vorzugsweise ist die Messeinheit M, M1 und M2 als extern angebauter Sensor oder als einen Teil des Förderkorbes F vorgesehen.

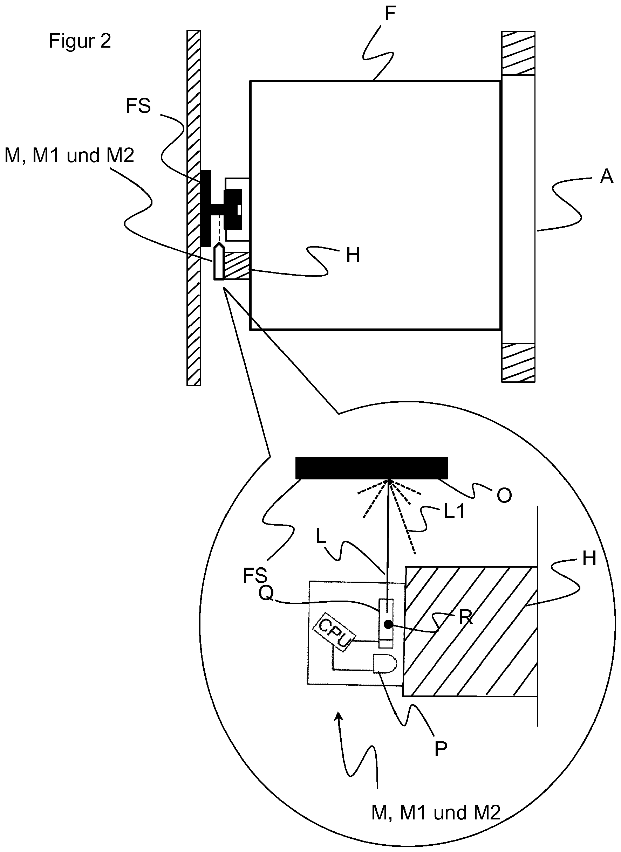

Entlang der Schnittlinie A - A in der Figur 1 ist in der Figur 2 schematisch das bevorzugte Ausführungsbeispiel des Aufzuges gezeigt, wobei an dem Förderkorb F vorzugsweise eine Halterung H vorgesehen ist, an der die Messeinheit M, M1 und M2 angebracht ist. Die Messeinheit M, M1 und M2 ist auf die Führungsschiene FS des Förderkorbes F gerichtet. Vorzugsweise kann die Messeinheit M, M1 und M2 auch auf den Schacht 2 gerichtet sein.

Bei der schematischen Vergrößerungsansicht in der Figur 2 ist die Messeinheit M, M1 und M2 in Detail dargestellt. Die Messeinheit M, M1 und M2 weist zumindest eine Lichtquelle Q auf, die kohärentes Licht L erzeugt und in einem Winkel, vorzugsweise ungleich 90°, auf eine sich relativ zu dem Förderkorb F des Personen- und/oder Gütertransportsystems 1 bewegende Oberfläche O aussendet. Vorzugsweise ist die Oberfläche O eine Bezugsfläche des Schachtes 2 oder ein im Schacht 2 montiertes Teil des Personen- und/oder Gütertransportsystems 1, wobei vorzugsweise das Teil des Aufzuges die Führungsschiene FS des Förderkorbes F oder ein Führungsseil des Förderkorbes F ist. Das kohärente Licht L ist vorzugsweise in Fahrtrichtung des Förderkorbs F des Personen- und/oder Gütertransportsystems 1 gerichtet.

Von der Oberfläche O wird das ausgesendete kohärente Licht L als reflektiertes Licht L1 an die Messeinheit M, M1 und M2 rückreflektiert. Die Messeinheit M, M1 und M2 erfasst erfindungsgemäß eine Interferenz zwischen dem erzeugten kohärenten Licht L und dem an der Oberfläche O reflektierten Licht L1 und ermittelt daraus zumindest das eine Messsignal.

Hierbei umfasst vorzugsweise die Messeinheit M, M1 und M2 einen Resonanzkörper R und eine an dem Resonanzkörper R angeordnete Photodiode P, wobei die Photodiode P insbesondere die Interferenz in dem Resonanzkörper R erfasst. Das Messsignal ist insbesondere als eine Amplitudenänderung des kohärenten Lichts L durch die Interferenz herleitbar.

Das erzeugte und ausgesandte kohärente Licht L wird entsprechend eines Absorptions- bzw. Reflexionsgrads der sich relativ zu dem Förderkorb F bewegenden Oberfläche O in unterschiedlichen Richtungen und Stärken an der Oberfläche O reflektiert / absorbiert. Hierbei wird auch ein Teil des ausgesandten Lichts L in dem Resonanzkörper R der Messeinheit M, M1 und M2 zurückreflektiert.

Bei einer Bewegung des Förderkorbes F zu der Oberfläche O und somit zu der Lichtquelle Q, bewirkt der Doppler-Effekt, dass der von der Oberfläche O in Richtung der Lichtquelle Q rückreflektierte Teil des ausgesandten Lichts L1 einen Phasenversatz zu dem ausgesandten Licht L erfährt. Dadurch interferiert der in Richtung der Lichtquelle Q rückreflektierte Teil des ausgesandten Lichts L1 mit dem erzeugten Licht L in dem Resonanzkörper R des Messeinheit M, M1 und M2.

Die Interferenz zwischen dem erzeugten Licht L und dem rückreflektierten Teil des ausgesandten Lichts L1 bewirkt eine periodische Änderung einer Intensität des erzeugten Lichts L in der Lichtquelle Q.

Die Photodiode P erfasst die Intensität I des erzeugten Lichts L an der Lichtquelle Q in Abhängigkeit von der Zeit t. Aus einem zeitlichen Verlauf der Intensität des erzeugten Lichts L wird eine Amplitude der periodischen Änderung der Intensität der Lichtquelle Q bestimmt, die als Messsignal an die Steuereinheit weitergeleitet wird.

Mit anderen Worten, durch die Bewegung des Förderkorbes F zu der Oberfläche O ist das Messsignal erzeugbar, aus dem die Position und/oder die Geschwindigkeit des Förderkorbes F herleitbar sind. Dadurch ist eine Verwendung einer Maßverkörperung nicht notwendig, so dass die Kosten für die Maßverkörperung eingespart werden können. Zusätzlich ist durch den Verzicht auf die Maßverkörperung eine Bauhöhe bzw. eine Baulänge des erfindungsgemäßen Personen- und/oder Gütertransportsystems unbeschränkbar.

Vorzugsweise ist an der Oberfläche O zumindest eine Codierungsmarke vorgesehen, die durch die Messeinheit M, M1 und M2 abtastbar ist und eine Referenzposition wiedergibt. Die Referenzposition umfasst insbesondere eine absolute Position des Förderkorbes F in Bezug zu einem Ausgang A des Personen- und/oder Gütertransportsystems 1, so dass ein exaktes Anhalten des Förderkorbes F vor dem Ausgang A ermöglicht wäre. Hierdurch ist es wiederum möglich, den Förderkorb F mit einer hohen Geschwindigkeit zu verfahren.

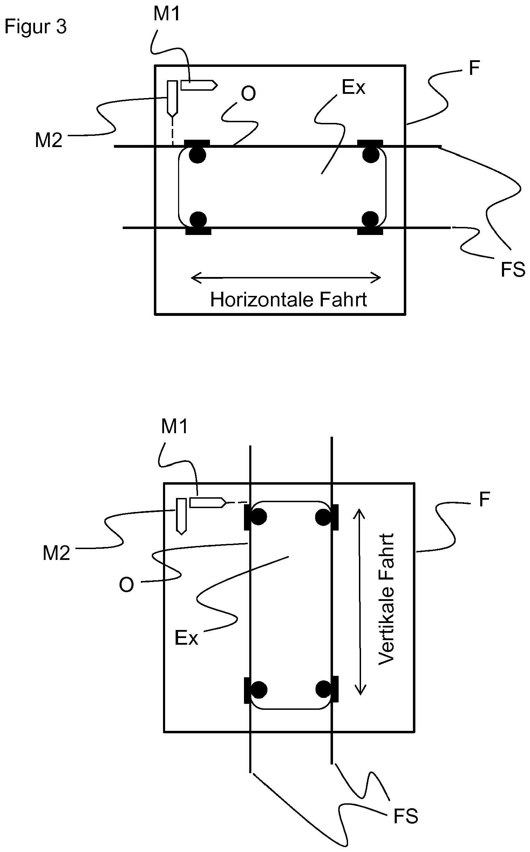

Aus der Figur 3 ist schematisch ein weiteres bevorzugtes Ausführungsbeispiel des erfindungsgemäßen Personen- und/oder Gütertransportsystems 1 gezeigt, bei dem zumindest zwei Messeinheiten M1 und M2 an dem Förderkorb F vorgesehen sind. Die Messeinheiten M1 und M2 sind in einem rechtwinkligen Winkel zueinander angeordnet und jeweils auf die Oberfläche O einer Führungsschiene FS gerichtet.

Der Förderkorb F ist an einer Antriebs- und Führungseinheit Ex, einem sogenannten Exchanger, angebracht, die entlang von vertikalen und horizontalen Führungsschienen FS geführt werden und somit eine vertikale und horizontale Bewegung des Förderkorbes F ermöglicht.

Bei einer horizontalen Fahrt des Förderkorbes F ist die eine Messeinheit M2 auf die Oberfläche O der horizontalen Führungsschiene FS gerichtet, so dass diese Messeinheit M2 das Messsignal bzgl. der horizontalen Geschwindigkeit bzw. der horizontalen Position des Förderkorbes F übermittelt.

Bei einer vertikalen Fahrt des Förderkorbes F ist die andere Messeinheit M1 auf die Oberfläche O der vertikalen Führungsschiene FS gerichtet, so dass diese Messeinheit M1 das Messsignal bzgl. der vertikalen Geschwindigkeit bzw. der vertikalen Position des Förderkorbes F übermittelt.

Vorzugsweise ermittelt die Steuereinheit aus den Messsignalen der beiden Messeinheiten M1 und M2 einen Bewegungsvektor des Förderkorbes F, so dass beliebige Bewegungsbahnen des Förderkorbes bestimmbar wären.

Hierbei ist vorteilhafterweise die Messeinheit M, M1 und M2 derart vorgesehen, dass ein Schaltsignal an die Steuereinheit sendbar ist, wenn das Messsignal einen vorgegebenen Schwellenwert überschreitet, wobei vorzugsweise der Schwellenwert eine definierte maximale Geschwindigkeit, eine definierte maximale Beschleunigung und/oder einen definierten Fahrweg des Förderkorbes F wiedergibt.

Hierdurch ist der Förderkorb F vor einer möglichen Gefährdung abgesichert.

Anstatt die Messeinheit M, M1 und M2 mobil an dem Förderkorb F vorzusehen, kann die Messeinheit M, M1 und M2 auch ortsfest in dem Schacht 2 vorgesehen sein, so dass sich der Förderkorb F relativ zu der Messeinheit M, M1 und M2 hin- bzw. fortbewegt. Hierbei ist die Messeinheit M, M1 und M2 auf beispielsweise eine Oberfläche O eines Zugseiles des Förderkorbes F oder eines Seiles, an dem ein Gegengewicht zu dem Förderkorb F aufgehängt ist, gerichtet, so dass sich die Oberfläche O des Zugseiles bzw. des Seiles des Gegengewichts zu der Messeinheit M, M1 und M2 bewegt.

Um eine Sicherheit des erfindungsgemäßen Personen- und/oder Gütertransportsystems 1 zu erhöhen, weist die Messeinheit M, M1 und M2 vorzugsweise zwei Lichtquellen Q auf, die in dieselbe Richtung zu der abzutastenden Oberfläche O gerichtet sind, so dass ein redundantes Messsystem auf einfachster Weise erreicht wird.

### Bezugszeichenliste

- 1: Personen- und/oder Gütertransportsystem
- 2: Führungsschacht bzw. Schacht

- A: Ausgang
- Ex: Exchanger
- F: Förderkorb
- FS: Führungsschiene
- H: Halterung
- L: Kohärentes ausgesendetes Licht
- L1: Reflektiertes Licht
- M, M1, M2: Messeinheit
- O: Oberfläche
- P: Photodiode
- Q: Lichtquelle
- R: Resonanzkörper

## Patentansprüche

1. Personen- und/oder Gütertransportsystem (1) mit
einem Förderkorb (F) zum Befördern von Personen und/oder Güter, zumindest einer laserbasierten, berührungslosen Messeinheit (M, M1, M2), die jeweils zumindest eine Lichtquelle (Q) aufweist und zumindest ein Messsignal ermittelt, und
einer Steuereinheit zum Empfangen des Messsignals und zum Bestimmen einer Geschwindigkeit und/oder einer Position des Förderkorbes (F) aus dem Messsignal,
wobei die Messeinheit (M, M1, M2) an dem Förderkorb (F) angeordnet ist, wobei die zumindest eine Lichtquelle (Q) kohärentes Licht (L) erzeugt und in einem Winkel, insbesondere ungleich 90°, auf eine sich relativ zu dem Förderkorb (F) des Personen-/Gütertransportsystems (1) bewegende Oberfläche (O) aussendet,
**dadurch gekennzeichnet, dass** die Messeinheit (M, M1, M2) eine Interferenz zwischen dem erzeugten kohärenten Licht (L) und einem an der Oberfläche (O) reflektierten Licht (L1) erfasst und daraus das zumindest eine Messsignal ermittelt, und
wobei die Messeinheit (M) einen Resonanzkörper (R) und eine an dem Resonanzkörper (R) angeordnete Photodiode (P) umfasst, wobei die Photodiode (P) die Interferenz in dem Resonanzkörper (R) erfasst.

2. Personen- und/oder Gütertransportsystem (1) nach Anspruch 1, **dadurch gekennzeichnet, dass** das Messsignal als eine Amplitudenänderung des kohärenten Lichts (L) durch die Interferenz herleitbar ist.

3. Personen- und/oder Gütertransportsystem (1) nach Anspruch 1 oder 2, **dadurch gekennzeichnet, dass** die Oberfläche (O) eine Bezugsfläche eines Schachtes (2) oder ein im Schacht (2) montiertes Teil des Personen/Gütertransportsystems (1) ist.

4. Personen- und/oder Gütertransportsystem (1) nach Anspruch 3, **dadurch gekennzeichnet, dass** das Teil des Personen-/Gütertransportsystems (1) eine Führungsschiene (FS) des Förderkorbes (F) oder ein Führungsseil des Förderkorbes (F) ist.

5. Personen- und/oder Gütertransportsystem (1) nach einem der vorhergehenden Ansprüche 1 bis 4, **dadurch gekennzeichnet, dass** das Personen-/Gütertransportsystem (1) einen Aufzug umfasst und der Förderkorb (F) eine Kabine des Aufzugs ist.

6. Personen- und/oder Gütertransportsystem (1) nach einem der vorhergehenden Ansprüche 1 bis 4, **dadurch gekennzeichnet, dass** das Gütertransportsystem (1) ein automatisiertes Logistiklager umfasst und der Förderkorb (F) ein Förderschlitten ist.

7. Personen- und/oder Gütertransportsystem (1) nach einem der vorhergehenden Ansprüche 1 bis 6, **dadurch gekennzeichnet, dass** an der Oberfläche (O) zumindest eine Codierungsmarke vorgesehen ist, die durch die Messeinheit (M) abtastbar ist und eine Referenzposition wiedergibt.

8. Personen- und/oder Gütertransportsystem (1) nach Anspruch 7, **dadurch gekennzeichnet, dass** die Referenzposition eine absolute Position des Förderkorbes (F) in Bezug zu einem Ausgang (A) des Personen-/Gütertransportsystems (1) umfasst.

9. Personen- und/oder Gütertransportsystem (1) nach einem der vorhergehenden Ansprüche 1 bis 8, **dadurch gekennzeichnet, dass** die Messeinheit (M) als extern angebauter Sensor oder als einen Teil des Förderkorbes (F) vorgesehen ist.

10. Personen- und/oder Gütertransportsystem (1) nach einem der vorhergehenden Ansprüche 1 bis 9, **dadurch gekennzeichnet, dass** zumindest zwei Messeinheiten (M1, M2) vorgesehen sind, und wobei die eine Messeinheit (M1) eine senkrechte Bewegung des Förderkorbes (F) und die andere Messeinheit (M2) eine horizontale Bewegung des Förderkorbes (F) erfasst.

11. Personen- und/oder Gütertransportsystem (1) nach Anspruch 10, **dadurch gekennzeichnet, dass** die Steuereinheit aus den Messsignalen der beiden Messeinheiten (M1, M2) einen Bewegungsvektor des Förderkorbes (F) ermittelt.

12. Personen- und/oder Gütertransportsystem (1) nach einem der vorhergehenden Ansprüche 1 bis 11, **dadurch gekennzeichnet, dass** die Messeinheit (M, M1, M2) derart vorgesehen ist, dass ein Schaltsignal an die Steuereinheit sendbar ist, wenn das Messsignal einen vorgegebenen Schwellenwert überschreitet.

13. Personen- und/oder Gütertransportsystem (1) nach Anspruch 12, **dadurch gekennzeichnet, dass** der Schwellenwert eine definierte maximale Geschwindigkeit, eine definierte maximale Beschleunigung und/oder einen definierten Fahrweg des Förderkorbes (F) wiedergibt.

## Claims

1. A passenger and/or goods transport system (1), comprising
a conveyor cage (F) for conveying persons and/or goods;
at least one laser-based contactless measurement unit (M, M1, M2) that respectively has at least one light source (Q) and that determines at least one measurement signal, and
a control unit for receiving the measurement signal and for determining a speed and/or a position of the conveying cage (F) from the measurement signal,
wherein the measurement unit (M, M1, M2) is arranged at the conveying cage (F); and
wherein the at least one light source (Q) generates coherent light (L) and transmits it at an angle, in particular not equal to 90°, to a surface (O) moving relative to the conveying cage (F) of the passenger/goods transport system (1),
**characterized in that** the measurement unit (M, M1, M2) detects interference between the generated coherent light (L) and light (L1) reflected at the surface (O) and determines the at least one measurement signal therefrom; and
with the measurement unit (M) comprising a resonant body (R) and a photodiode (P) arranged at the resonant body (R), with the photodiode (P) detecting the interference in the resonant body (R).

2. A passenger and/or goods transport system (1) in accordance with claim 1, **characterized in that** the measurement signal can be derived as an amplitude change of the coherent light (L) by the interference.

3. A passenger and/or goods transport system (1) in accordance with claim 1 or claim 2, **characterized in that** the surface (O) is a reference surface of a shaft (2) or is a part of the passenger/goods transport system (1) mounted in the shaft (2).

4. A passenger and/or goods transport system (1) in accordance with claim 3, **characterized in that** the part of the passenger/goods transport system (1) is a guide rail (FS) of the conveying cage (F) or a guide rope of the conveying cage (F).

5. A passenger and/or goods transport system (1) in accordance with any one of the preceding claims 1 to 4, **characterized in that** the passenger/goods transport system (1) comprises a lift and the conveying cage (F) is a cabin of the lift.

6. A passenger and/or goods transport system (1) in accordance with any one of the preceding claims 1 to 4, **characterized in that** the passenger/goods transport system (1) comprises an automated logistics store and the conveying cage (F) is a conveying carriage.

7. A passenger and/or goods transport system (1) in accordance with any one of the preceding claims 1 to 6, **characterized in that** at least one encoding mark is provided at the surface (O) that can be scanned by the measurement unit (M) and reproduces a reference position.

8. A passenger and/or goods transport system (1) in accordance with claim 7, **characterized in that** the reference position comprises an absolute position of the conveying cage (F) with respect to an outlet (A) of the passenger/goods transport system (1).

9. A passenger and/or goods transport system (1) in accordance with any one of the preceding claims 1 to 8, **characterized in that** the measurement unit (M) is provided as an externally attached sensor or as a part of the conveying cage (F).

10. A passenger and/or goods transport system (1) in accordance with any one of the preceding claims 1 to 9, **characterized in that** at least two measurement units (M1, M2) are provided, and with the measurement unit (M1) detecting a perpendicular movement of the conveying cage (F) and with the other measurement unit (M2) detecting a horizontal movement of the conveying cage (F).

11. A passenger and/or goods transport system (1) in accordance with claim 10, **characterized in that** the control unit determines a movement vector of the conveying cage (F) from the measurement signals of the two measurement units (M1, M2).

12. A passenger and/or goods transport system (1) in accordance with any one of the preceding claims 1 to 11, **characterized in that** the measurement unit (M, M1, M2) is provided such that a switching signal can be transmitted to the control unit when the measurement signal exceeds a predefined threshold value.

13. A passenger and/or goods transport system (1) in accordance with claim 12, **characterized in that** the threshold value reproduces a defined maximum speed, a defined maximum acceleration and/or a defined route of the conveying cage (F).

## Revendications

1. Système de transport de personnes et/ou de marchandises (1), comportant une nacelle de convoyage (F) pour convoyer des personnes et/ou des marchandises,
au moins une unité de mesure (M, M1, M2) basée sur laser et sans contact physique, qui comporte au moins une source de lumière (Q) et qui détermine au moins un signal de mesure, et
une unité de commande destinée à recevoir le signal de mesure et à déterminer une vitesse et/ou une position de la nacelle de convoyage (F) à partir du signal de mesure,
dans lequel
l'unité de mesure (M, M1, M2) est agencée sur la nacelle de convoyage (F), ladite au moins une source de lumière (Q) génère une lumière cohérente (L) et l'émet sous un angle, en particulier différent de 90°, sur une surface (O) se déplaçant par rapport à la nacelle de convoyage (F) du système de transport de personnes/marchandises (1),
**caractérisé en ce que** l'unité de mesure (M, M1, M2) détecte une interférence entre la lumière cohérente (L) générée et une lumière (L1) réfléchie à la surface (O), et en détermine ledit au moins un signal de mesure, et l'unité de mesure (M) comprend un corps de résonance (R) et une photodiode (P) agencée sur le corps de résonance (R), la photodiode (P) détectant l'interférence dans le corps de résonance (R).

2. Système de transport de personnes et/ou de marchandises (1) selon la revendication 1, **caractérisé en ce que** le signal de mesure peut être dérivé en tant que variation d'amplitude de la lumière cohérente (L) par l'interférence.

3. Système de transport de personnes et/ou de marchandises (1) selon la revendication 1 ou 2, **caractérisé en ce que** la surface (O) est une surface de référence d'une cage (2) ou une partie du système de transport de personnes/marchandises (1) montée dans la cage (2).

4. Système de transport de personnes et/ou de marchandises (1) selon la revendication 3, **caractérisé en ce que** la partie du système de transport de personnes/marchandises (1) est un rail de guidage (FS) de la nacelle de convoyage (F) ou un câble de guidage de la nacelle de convoyage (F).

5. Système de transport de personnes et/ou de marchandises (1) selon l'une des revendications précédentes 1 à 4, **caractérisé en ce que** le système de transport de personnes/marchandises (1) comprend un ascenseur, et la nacelle de convoyage (F) est une cabine de l'ascenseur.

6. Système de transport de personnes et/ou de marchandises (1) selon l'une des revendications précédentes 1 à 4, **caractérisé en ce que** le système de transport de marchandises (1) comprend un entrepôt logistique automatisé, et la nacelle de convoyage (F) est un chariot de convoyage.

7. Système de transport de personnes et/ou de marchandises (1) selon l'une des revendications précédentes 1 à 6, **caractérisé en ce qu'**au moins un marquage de codage est prévu sur la surface (O), qui peut être balayé par l'unité de mesure (M) et qui reproduit une position de référence.

8. Système de transport de personnes et/ou de marchandises (1) selon la revendication 7, **caractérisé en ce que** la position de référence inclut une position absolue de la nacelle de convoyage (F) par rapport à une sortie (A) du système de transport de personnes/marchandises (1).

9. Système de transport de personnes et/ou de marchandises (1) selon l'une des revendications précédentes 1 à 8, **caractérisé en ce que** l'unité de mesure (M) est prévue sous la forme d'un capteur monté externe ou sous la forme d'une partie de la nacelle de convoyage (F).

10. Système de transport de personnes et/ou de marchandises (1) selon l'une des revendications précédentes 1 à 9, **caractérisé en ce qu'**il est prévu au moins deux unités de mesure (M1, M2), une unité de mesure (M1) détectant un mouvement vertical de la nacelle de convoyage (F) et l'autre unité de mesure (M2) détectant un mouvement horizontal de la nacelle de convoyage (F).

11. Système de transport de personnes et/ou de marchandises (1) selon la revendication 10, **caractérisé en ce que** l'unité de commande détermine un vecteur de mouvement de la nacelle de convoyage (F) à partir des signaux de mesure des deux unités de mesure (M1, M2).

12. Système de transport de personnes et/ou de marchandises (1) selon l'une des revendications précédentes 1 à 11, **caractérisé en ce que** l'unité de mesure (M, M1, M2) est prévue de telle sorte qu'un signal de commutation peut être émis à l'unité de commande lorsque le signal de mesure dépasse une valeur seuil donné.

13. Système de transport de personnes et/ou de marchandises (1) selon la revendication 12, **caractérisé en ce que** la valeur seuil reproduit une vitesse maximale définie, une accélération maximale définie et/ou un trajet de déplacement défini de la nacelle de convoyage (F).
